# EUROPÄISCHE PATENTSCHRIFT

(11) **EP 1 416 457 B1**
(45) Veröffentlichungstag und Bekanntmachung des Hinweises auf die Patenterteilung: **24.05.2006**
(21) Anmeldenummer: 03014621.1
(22) Anmeldetag: 26.06.2003
(51) Int. Cl.: G08B 13/14, G08B 13/184

(54) **Optische Überwachungsvorrichtung**
Optical monitoring system
Dispositif optique de surveillance

(30) Priorität: 30.10.2002 DE 20216757 U
(43) Veröffentlichungstag der Anmeldung: 06.05.2004
(73) Patentinhaber: SICK AG, 79183 Waldkirch (DE)
(72) Erfinder: Braune, Ingolf, 79194 Gundelfingen (DE); Wüstefeld, Martin, 79350 Sexau (DE); Bergbach, Roland, 79312 Emmendingen (DE)
(74) Vertreter: Manitz, Finsterwald & Partner GbR

(56) Entgegenhaltungen:
- EP-A- 0 598 630
- EP-A- 1 160 587
- DE-A- 19 913 156
- US-A- 2 227 147
- US-A- 5 559 664

## Beschreibung

Die Erfindung betrifft eine optische Überwachungsvorrichtung mit einem Lichtsender zum Aussenden von Licht in einen Schutzbereich und einem Lichtempfänger zum Empfangen des ausgesandten Lichts und zum Ausgeben entsprechender Empfangssignale.

Derartige Überwachungsvorrichtungen werden beispielsweise zur Absicherung einer Gesenkbiegepresse verwendet. Bei einer solchen Gesenkbiegepresse wird ein als Biegewerkzeug ausgebildetes Oberwerkzeug in beispielsweise vertikaler Richtung auf ein stationäres Unterwerkzeug zubewegt, auf dem ein durch das Biegewerkzeug zu bearbeitendes Werkstück gehalten ist.

Zum Schutz einer Person, die Werkstücke in die Gesenkbiegepresse einlegt, sind ein Lichtsender und ein Lichtempfänger an dem Oberwerkzeug angebracht. Der Lichtsender und der Lichtempfänger sind üblicherweise mit Hilfe von Haltearmen an dem Oberwerkzeug montiert, und sie bilden zusammen eine Lichtschranke. Durch diese Lichtschranke ist ein Schutzbereich überwachbar, welcher zu der zu dem Unterwerkzeug weisenden Kante des Oberwerkzeugs, der so genannten Biegelinie, benachbart ist. Wird im Schutzbereich zwischen dem Biegewerkzeug und dem Unterwerkzeug ein unerwünschtes Objekt detektiert, so wird durch eine Vorrichtungssteuerung die Bewegung des Oberwerkzeugs in Richtung des Unterwerkzeugs gestoppt. Auf diese Weise wird ein Einklemmen von Objekten oder Körperteilen zwischen dem Oberwerkzeug und dem Unterwerkzeug verhindert.

Wegen der Trägheit des Oberwerkzeugs kann die Verlangsamung der Bewegung des Oberwerkzeugs nicht instantan erfolgen. Die Strecke, die notwendig ist, um das Biegewerkzeug aus seiner regulären Bewegung bis zum Stillstand abzubremsen, wird auch als Nachlaufweg oder Nachlaufstrecke bezeichnet. Um einen wirksamen Schutz vor Verletzungen zu bieten, wird das Licht der Lichtschranke deshalb im Abstand der Nachlaufstrecke unterhalb der Biegelinie des Biegewerkzeugs ausgesandt.

Zur Überwachung eines erweiterten Schutzbereichs werden bei einem Lichtschrankensystem, wie es beispielsweise aus der EP-A-0 598 630 bekannt ist, mehrere Lichtsender und entsprechend viele Lichtempfänger eingesetzt, um eine entsprechende Anzahl von zueinander beabstandeten Lichtbündeln aussenden und erfassen zu können. Dies erhöht jedoch die Komplexität des Überwachungssystems.

Der Erfindung liegt die Aufgabe zugrunde, eine optische Überwachungsvorrichtung mit erhöhter Zuverlässigkeit und erhöhter Sicherheit zu schaffen, die einen möglichst einfachen Aufbau aufweist.

Zur Lösung der Aufgabe ist eine optische Überwachungsvorrichtung mit den Merkmalen des Anspruchs 1 vorgesehen.

Die erfindungsgemäße optische Überwachungsvorrichtung weist einen Lichtsender zum Aussenden von wenigstens zwei, im Wesentlichen parallel zueinander versetzten Lichtbündeln in einen Schutzbereich und einen Lichtempfänger zum Empfangen der ausgesandten Lichtbündel und zum Ausgeben entsprechender Empfangssignale auf, wobei der Lichtempfänger mehrere photoempfindliche Elemente mit jeweils einem länglichen lichtempfindlichen Bereich aufweist, dessen Längsrichtung parallel zu der Richtung ausgerichtet ist, in der die Lichtbündel zueinander versetzt sind, so dass jeweils alle abgestrahlten Lichtbündel vollständig durch den lichtempfindlichen Bereich erfassbar sind. Die photoempfindlichen Elemente sind bei paralleler Ausrichtung der lichtempfindlichen Bereiche in einer Reihe senkrecht zu der versetzten Anordnung der Lichtbündel nebeneinander angeordnet. Zur Unterscheidung der Lichtbündel am Lichtempfänger ist eine Steuerschaltung vorgesehen, die den Lichtsender zu einem zeitlich versetzten Aussenden der Lichtbündel veranlasst.

Erfindungsgemäß ist also der Einsatz von mindestens zwei, im Wesentlichen parallel zueinander versetzten Lichtbündeln und wenigstens eines photoempfindlichen Elements vorgesehen, dessen lichtempfindlicher Bereich derart länglich ausgebildet ist, dass alle abgestrahlten Lichtbündel vollständig durch diesen einen lichtempfindlichen Bereich erfassbar sind.

Durch das Aussenden mehrerer zueinander versetzter Lichtbündel kann zum Einen ein vergrößerter Schutzbereich und zum Anderen ein Schutzbereich mit einer höheren Ortsauflösung überwacht werden.

Im Falle einer Gesenkbiegepresse können beispielsweise ein erstes Lichtbündel im Abstand der Nachlaufstrecke parallel zur Unterseite des Biegewerkzeugs und ein zweites Lichtbündel in einem größeren Abstand dazu verlaufen.

Umgekehrt wäre es ebenso möglich, ein erstes Lichtbündel im Abstand der Nachlaufstrecke parallel zur Unterseite des Biegewerkzeugs auszusenden und ein zweites Lichtbündel in einem geringeren Abstand, das heißt also zwischen der Unterseite des Biegewerkzeugs und dem ersten Lichtbündel, auszusenden. Selbst wenn sich das Biegewerkzeug bis auf den Abstand der Nachlaufstrecke oder darüber hinaus dem Unterwerkzeug nähert und das erste Lichtbündel folglich nicht mehr aktiv an einer Überwachung mitwirken kann, kann ein zwischen das Biegewerkzeug und das Unterwerkzeug gelangter menschlicher Finger oder anderer Gegenstand dann immer noch durch das zweite Lichtbündel detektiert werden. Auf diese Weise trägt die erfindungsgemäße Überwachungsvorrichtung zu einer erhöhten Arbeitssicherheit bei.

Da alle ausgesandten Lichtbündel von einem einzigen lichtempfindlichen Bereich erfasst werden, ist zur Unterscheidung der einzelnen Lichtbündel am Lichtempfänger eine zeitlich versetzte Abstrahlung der Lichtbündel vorgesehen. Die Identifikation der einzelnen Lichtbündel erfolgt erfindungsgemäß also nicht dadurch, dass jedes Lichtbündel eine unterschiedliche Wellenlänge aufweist oder dass jedem Lichtbündel ein eigener lichtempfindlicher Bereich zugeordnet ist, sondern allein durch die Steuerschaltung, die den Lichtsender zu einem zeitlich versetzten Aussenden der Lichtbündel veranlasst. Es ist also nur ein einziger Lichtempfänger erforderlich. Der apparative Aufbau der erfindungsgemäßen Überwachungsvorrichtung wird dadurch vereinfacht, so dass sich die Überwachungsvorrichtung mit geringem wirtschaftlichen Aufwand herstellen und installieren lässt.

Gleichzeitig ist die Überwachungsvorrichtung unempfindlich gegenüber Schwingungen der Lichtbündel in Längsrichtung des lichtempfindlichen Bereichs des photoempfindlichen Elements. Je nach Dimensionierung der länglichen Ausbildung des lichtempfindlichen Bereichs können sich die Lichtbündel am Ort des Empfängers jeweils über die gesamte Länge des lichtempfindlichen Bereichs in Längsrichtung hin- und herbewegen, ohne dabei den lichtempfindlichen Bereich zu verlassen und dadurch irrtümlicherweise ein Alarmsignal auszulösen, das fälschlicherweise beispielsweise zu einer Abbremsung des Biegewerkzeugs einer Gesenkbiegepresse führen würde. Dadurch wird die Zuverlässigkeit der erfindungsgemäßen Überwachungsvorrichtung erhöht, und Ausfallzeiten beispielsweise einer Gesenkbiegepresse werden reduziert. Dieser Effekt ist besonders vorteilhaft, wenn die Längsrichtung des lichtempfindlichen Bereichs einer Vertikalrichtung entspricht, da die erläuterten Schwingungen typischerweise in Vertikalrichtung besonders stark auftreten.

Durch die Anordnung der photoempfindlichen Elemente in einer Reihe nebeneinander bei paralleler Ausrichtung der lichtempfindlichen Bereiche ist die Überwachungsvorrichtung nicht nur gegenüber Schwingungen in Längsrichtung der lichtempfindlichen Bereiche, sondern auch in einer dazu senkrechten Richtung tolerant. Falls ein abgestrahltes Lichtbündel also quer zur Längsrichtung des lichtempfindlichen Bereichs aus dem lichtempfindlichen Bereich hinauswandert, so wird es von dem jeweils benachbarten lichtempfindlichen Bereich erfasst.

Vorteilhafte Ausführungsformen der Erfindung sind den Unteransprüchen, der Beschreibung und der Zeichnung zu entnehmen.

Gemäß einer bevorzugten Ausführungsform der Erfindung weist der Lichtsender eine Lichtquelle und eine Blendenanordnung auf, durch die jeweils ein auszusendendes Lichtbündel aus dem Licht der Lichtquelle selektierbar ist. Dadurch, dass nur eine Lichtquelle vorgesehen ist, ist die Anzahl der erforderlichen Bauteile der erfindungsgemäßen Überwachungsvorrichtung verringert. Dies reduziert zum Einen weiter den wirtschaftlichen Aufwand zur Herstellung der Überwachungsvorrichtung, und zum Anderen erhöht es die Zuverlässigkeit der Vorrichtung. Die Blendenanordnung stellt ein einfaches Mittel dar, um aus dem Licht der Lichtquelle die einzelnen Lichtbündel abzuteilen.

Vorteilhafterweise weist die Blendenanordnung ein elektronisch steuerbares Intensitätsfilter auf. Derartige Intensitätsfilter sind besonders schnell schaltbar, so dass sich die einzelnen Lichtbündel mit kurzen zeitlichen Abständen zueinander aussenden lassen.

Bevorzugt weist die Blendenanordnung einen LCD-Shutter auf. Ein derartiger Shutter ist nicht nur besonders schnell schaltbar, sondern es lässt sich auch die Form der Shutter-Öffnung variabel einstellen, so dass die Querschnittsform der Lichtbündel in der Ebene senkrecht zur Abstrahlrichtung einstellbar ist.

Die Lichtbündel können zumindest bereichsweise aneinander angrenzen oder überlappen. Dadurch ist der Schutzbereich nahezu lückenlos überwachbar.

Gemäß einer weiteren bevorzugten Ausführungsform der erfindungsgemäßen Überwachungsvorrichtung sind der Lichtsender und der Lichtempfänger auf der gleichen Seite des Schutzbereichs angeordnet und die ausgesandten Lichtbündel durch wenigstens einen auf der jeweils gegenüberliegenden Seite des Schutzbereichs angeordneten Reflektor in Richtung des Lichtempfängers umlenkbar. Durch die Anordnung des Lichtsenders und -empfängers auf der gleichen Seite des Schutzbereichs lassen sich beide in einer baulichen Einheit ausbilden, was eine kompakte Bauweise ermöglicht. Darüber hinaus ist kein großer Justageaufwand erforderlich, da der Lichtsender lediglich grob auf den Reflektor ausgerichtet werden muss. Wird ein geeignetes Reflektormaterial verwendet, beispielsweise eine retroreflektierende Folie, so kann leicht sichergestellt werden, dass die ausgesandten Lichtbündel durch den Lichtempfänger erfassbar sind.

Jedem Lichtbündel kann ein eigener Reflektor zugeordnet sein.

Besonders vorteilhaft ist es dabei, wenn wenigstens ein und insbesondere jeder Reflektor entlang einer Richtung senkrecht zu der versetzten Anordnung der Lichtbündel eine Kodierung aufweist. Durch die am Reflektor erzeugte Kodierung der Lichtbündel ist am Lichtempfänger feststellbar, ob ein Lichtbündel tatsächlich den gesamten Schutzbereich durchlaufen hat. Wird ein Lichtbündel beispielsweise an einem im Schutzbereich befindlichen Fremdkörper reflektiert und vom Lichtempfänger erfasst, aber keine Kodierung des Lichtbündels festgestellt, so wird trotz des detektierten Lichtbündels ein Alarmsignal ausgegeben, das beispielsweise im Falle einer Gesenkbiegepresse zum Abbremsen des Biegewerkzeugs führen könnte. Dies erhöht die Sicherheit der Überwachungsvorrichtung.

Bevorzugt ist der Lichtempfänger in den Lichtsender integriert. Dadurch wird eine besonders kompakte Bauweise der Überwachungsvorrichtung erreicht.

Nachfolgend wird die Erfindung beispielhaft und unter Bezugnahme auf die beigefügte Zeichnung beschrieben. Es zeigen:
- Fig. 1: eine schematische Darstellung einer ersten Ausführungsform der erfindungsgemäßen Überwachungsvorrichtung;
- Fig. 2: eine schematische Darstellung einer zweiten Ausführungsform der erfindungsgemäßen Überwachungsvorrichtung;
- Fig. 3 und 4: schematisch die Funktion einer Blendenanordnung der Überwachungsvorrichtung von Fig. 1 oder 2;
- Fig. 5: die Anordnung der Überwachungsvorrichtung von Fig. 2 an einer Gesenkbiegepresse;
- Fig. 6: einen Schnitt durch die Anordnung von Fig. 5 senkrecht zur Abstrahlrichtung der Lichtbündel der Überwachungsvorrichtung am Ort eines lichtempfindlichen Bereiches des Lichtempfängers; und
- Fig. 7: den Schnitt von Fig. 6 am Ort mehrerer nebeneinander angeordneter lichtempfindlicher Bereiche des Lichtempfängers.

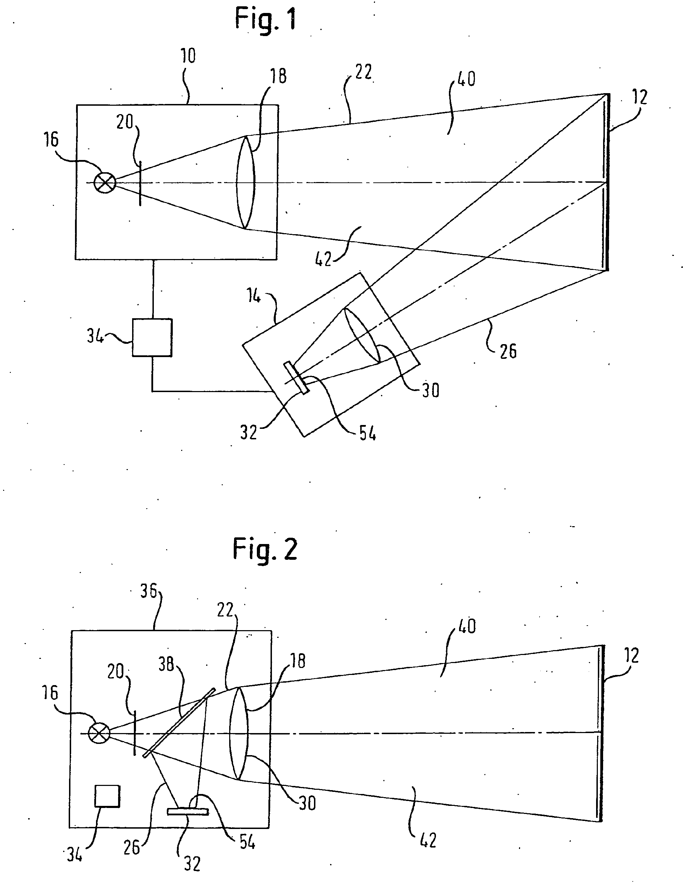

In Fig. 1 ist eine erste Ausführungsform der erfindungsgemäßen optischen Überwachungsvorrichtung dargestellt. Die wesentlichen Elemente der Überwachungsvorrichtung sind ein Lichtsender 10, ein Reflektor 12 und ein Lichtempfänger 14.

Der Lichtsender 10 umfasst eine Lichtquelle 16 zum insbesondere pulsförmigen Aussenden von beispielsweise infrarotem Licht. Als geeignete Lichtquellen 16 kommen zum Beispiel Leuchtdioden oder Halbleiterlaser in Frage. Das von der Lichtquelle 16 ausgesandte Licht 22 tritt über eine Beleuchtungsoptik 18, beispielsweise ein Linsensystem, aus dem Lichtsender 10 aus. Dabei passiert das Licht eine Blendenanordnung 20, die zwischen der Lichtquelle 16 und der Beleuchtungsoptik 18 angeordnet ist und deren Funktion weiter unten näher erläutert wird.

Das von dem Lichtsender 10 abgestrahlte Licht 22 durchläuft einen zu überwachenden Schutzbereich, bevor es auf den Reflektor 12 trifft. Der Reflektor 12 kann beispielsweise eine retroreflektierende Folie aufweisen.

Das vom Reflektor 12 reflektierte Licht 26 wird von dem Lichtempfänger 14 erfasst. Zu diesem Zweck weist der Lichtempfänger 14 eine geeignete Abbildungsoptik 30 auf, beispielsweise ein Linsensystem, die das reflektierte Licht 26 auf ein photoempfindliches Element 32 mit einem länglichen lichtempfindlichen Bereich 54 abbildet.

Die erfindungsgemäße Überwachungsvorrichtung arbeitet nach Art einer Lichtschranke, d.h. es wird ermittelt, ob das vom Lichtsender 10 ausgesandte Licht 22 erwartungsgemäß als reflektiertes Licht 26 vom Lichtempfänger 14 erfasst wird oder ob es durch einen in den Schutzbereich eingedrungenen Gegenstand an einem Auftreffen auf das photoempfindliche Element 32 des Lichtempfängers 14 gehindert wird. Zur Auswertung der vom photoempfindlichen Element 32 detektierten Lichtsignale weist der Lichtempfänger 14 eine geeignete Auswerteinheit auf, die in Fig. 1 nicht gezeigt ist.

Da erfindungsgemäß eine zeitlich versetzte Aussendung von Lichtbündeln 40, 42 vorgesehen ist, sind der Lichtsender 10 und der Lichtempfänger 14 über eine Steuerschaltung 34 miteinander verbunden, welche einerseits die Abstrahlung der Lichtbündel 40, 42 von dem Lichtsender 10 steuert und andererseits hiermit den Empfang des reflektierten Lichts 26 durch den Lichtempfänger 14 synchronisiert.

Bei der in Fig. 1 gezeigten ersten Ausführungsform der erfindungsgemäßen Überwachungsvorrichtung sind der Lichtsender 10 und der Lichtempfänger 14 räumlich voneinander getrennt, d.h. sie bilden jeweils in sich abgeschlossene, eigenständige bauliche Einheiten.

Bei der in Fig. 2 dargestellten zweiten Ausführungsform sind der Lichtsender und der Lichtempfänger dagegen zu einer Sende/Empfangseinheit 36 miteinander kombiniert, d.h. der Lichtempfänger ist in den Lichtsender integriert. In diesem Fall wird die Beleuchtungsoptik 18 gleichzeitig als Abbildungsoptik 30 verwendet. Über einen halbdurchlässigen Spiegel 38 wird das von der Sende/Empfangseinheit 36 erfasste reflektierte Licht 26 auf den lichtempfindlichen Bereich des photoempfindlichen Elements 32 abgebildet.

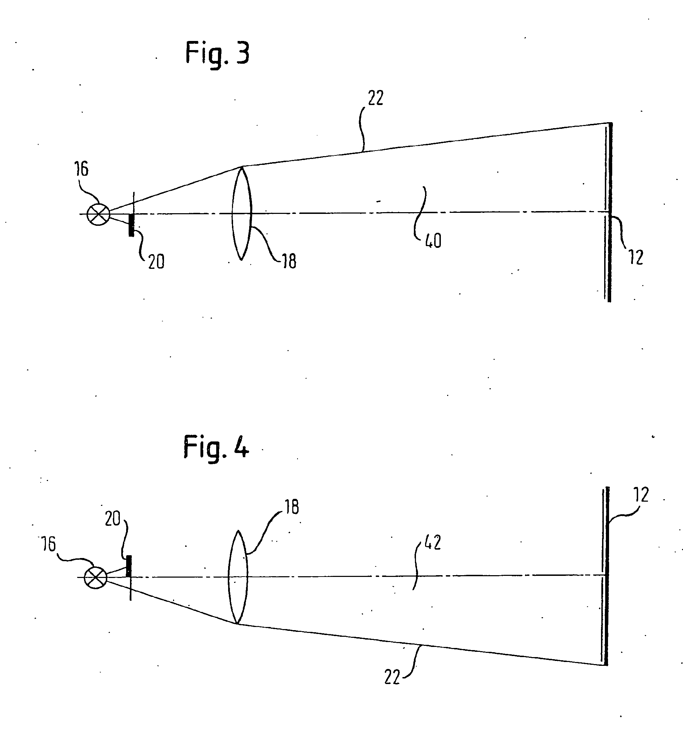

Wie in Fig. 3 und Fig. 4 gezeigt ist, dient die Blendenanordnung 20 dazu, aus dem von der Lichtquelle 16 ausgesandten Licht 22 wahlweise ein erstes oder ein zweites Lichtbündel 40, 42 zu selektieren. Es kann sich dabei beispielsweise um ein oberes Lichtbündel 40 (Fig. 3) und ein unteres Lichtbündel 42 (Fig. 4) handeln.

Vorzugsweise weist die Blendenanordnung 20 einen elektronisch steuerbaren LCD-Shutter auf. Ein solcher Shutter kann sehr schnell geschaltet werden. Außerdem lässt sich bei LCD-Shuttern die Shutter-Öffnung nahezu beliebig einstellen, so dass es grundsätzlich möglich ist, Lichtbündel mit unterschiedlichen Querschnitten senkrecht zur Abstrahlrichtung zu erzeugen. Für die Überwachung des Schutzbereichs in Frage kommende Lichtbündelquerschnitte können beispielsweise rund, halbkreisförmig oder eckig, insbesondere rechteckig sein.

Durch entsprechendes Umschalten der Blendenanordnung 20 können wahlweise beziehungsweise wechselweise zwei (oder mehr) verschiedene Zonen eines Schutzbereichs überwacht werden, beispielsweise eine obere Zone, wie in Fig. 3 dargestellt ist, oder eine untere Zone, wie in Fig. 4 gezeigt ist.

Entsprechend werden jeweils unterschiedliche Teilbereiche des Reflektors 12 von den ausgesandten Lichtbündeln 40, 42 ausgeleuchtet. Es ist daher möglich, einen Reflektor 12 mit einer einzigen durchgehenden Reflektorfläche zu verwenden, die derart groß gewählt ist, dass sie jedenfalls beide Lichtbündel 40, 42 erfasst. Ebenso kann man aber auch einen Reflektor mit zwei voneinander getrennten Reflektorflächen oder sogar zwei voneinander getrennte Reflektoren verwenden, die jeweils einem der Lichtbündel 40, 42 zugeordnet sind.

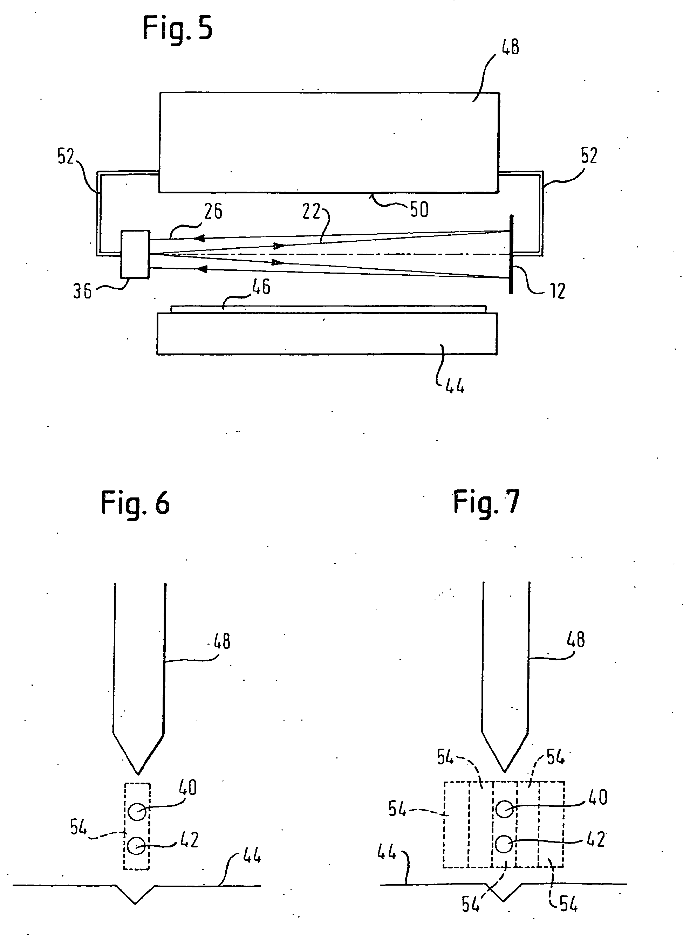

Zur Erfassung des ersten und zweiten beziehungsweise des oberen und unteren Lichtbündels 40, 42 ist im Lichtempfänger 14 bzw. 36 ein photoempfindliches Element 32 mit einem einzigen lichtempfindlichen Bereich 54 vorgesehen. Die Lichtbündel 40, 42 sind in einer Richtung senkrecht zur Abstrahlrichtung zueinander versetzt angeordnet, wobei sie, wie in Fig. 3 und 4 gezeigt ist, aneinander angrenzen oder, wie in Fig. 6 und 7 gezeigt ist, zueinander beabstandet sein können. Der lichtempfindliche Bereich 54 des photoempfindlichen Elements 32 weist in der Richtung parallel zu der Anordnung der Lichtbündel 40, 42 eine längliche Ausbildung auf. Bei wahlweiser oder abwechselnder Abstrahlung der Lichtbündel 40, 42 wird also immer nur ein Teilbereich des lichtempfindlichen Bereichs durch das reflektierte Licht ausgeleuchtet.

Es ist möglich, einen Reflektor mit einem Muster aus reflektierenden und nicht reflektierenden Bereichen zu versehen, um die reflektierten Lichtbündel 40, 42 zu kodieren. Eine solche Kodierung der Lichtbündel 40, 42 hat den Vorteil, dass der Lichtempfänger 14 bzw. 36 ein vom Reflektor 12 reflektiertes Lichtbündel von einem nicht kodierten Lichtbündel unterscheiden kann, das irrtümlicherweise an einem in den Schutzbereich gelangten Gegenstand reflektiert worden ist.

Es ist ferner möglich, dass zwei getrennte Reflektoren oder Reflektorflächen mit unterschiedlichen Mustern kodiert sind. Durch eine derartige unterschiedliche Kodierung können die empfangenen Lichtbündel 40, 42 ebenfalls voneinander unterschieden werden.

Bei der Verwendung eines oder mehrerer kodierter Reflektoren muss der Empfänger ortsauflösend ausgebildet sein, um die Kodierung empfangsseitig identifizieren zu können.

Als ortsauflösender Empfänger kann beispielsweise eine Empfangszeile mit mehreren Empfangselementen vorgesehen sein, die jeweils eine asymmetrische Pixelgeometrie, also jeweils einen länglichen lichtempfindlichen Bereich besitzen. Dabei kann das Verhältnis von Pixelhöhe zu Pixelbreite vorzugsweise größer als 5 sein. Der jeweilige lichtempfindliche Bereich kann beispielsweise eine Größe von 12 µm x 250 µm aufweisen.

Fig. 5 zeigt die Verwendung der erfindungsgemäßen Überwachungsvorrichtung gemäß der zweiten Ausführungsform (vgl. Fig. 2) zur Absicherung einer Gesenkbiegepresse. Die Gesenkbiegepresse umfasst ein Unterwerkzeug 44, auf dem ein zu bearbeitendes Werkstück 46 angeordnet ist. Ein Oberwerkzeug 48 kann in vertikaler Richtung relativ zum Unterwerkzeug 44 bewegt werden, um zur Bearbeitung des Werkstücks 46 eine entsprechende Kraft auf dieses auszuüben.

Zur Vermeidung von Personenschäden, insbesondere eines Einklemmens von Körperteilen, ist ein zwischen dem Oberwerkzeug 48 und dem Unterwerkzeug 44 befindlicher Schutzbereich zu überwachen. Typischerweise ist dies ein Bereich, der sich parallel zu einer zum Unterwerkzeug 44 weisenden Unterseite 50 des Oberwerkzeugs 48 erstreckt, der so genannten Biegelinie, und der einen Abstand zur Unterseite 50 aufweist, welcher der Nachlaufstrecke des Oberwerkzeugs 48 entspricht.

Die Sende/Empfangseinheit 36 der Überwachungsvorrichtung ist mittels eines ersten Halterarmes 52 an einem Ende des Oberwerkzeugs 48 angebracht, während der Reflektor 12 mittels eines zweiten Haltearmes 52 an dem gegenüberliegenden Ende des Oberwerkzeugs 48 befestigt ist.

Wie in Fig. 6 dargestellt ist, sendet die Sende/Empfangseinheit 36 wahlweise ein oberes Lichtbündel 40 oder ein unteres Lichtbündel 42 aus, wobei die Lichtbündel 40, 42 zueinander beabstandet sind. Der Abstand des unteren Lichtbündels 42 zur Unterseite 50 des Oberwerkzeugs 48 entspricht im Wesentlichen der Nachlaufstrecke des Oberwerkzeugs 48, beispielsweise 10 mm bis 14 mm. Dagegen verläuft das obere Lichtbündel 42 in einem Abstand von ungefähr 6 mm zur Unterseite 50 des Oberwerkzeugs 48.

Nähert sich das Oberwerkzeug 48 bei einem Pressbiegevorgang so weit an das Unterwerkzeug 44 an, dass der Abstand zwischen Oberwerkzeug 48 und Unterwerkzeug 44 weniger als die Nachlaufstrecke beträgt, so ist eine Überwachung des Zwischenraums zwischen Oberwerkzeug 48 und Unterwerkzeug 44 mit Hilfe des unteren Lichtbündels 42 nicht mehr möglich. Trotzdem könnte der Abstand zwischen Oberwerkzeug 48 und Unterwerkzeug 44 immer noch ausreichend groß sein, um beispielsweise einen Finger einzuklemmen.

Um auch einen innerhalb des Nachlaufwegs liegenden Zwischenraum zwischen Unterwerkzeug 44 und Oberwerkzeug 48 noch wirksam überwachen zu können, ist eine Umschaltung von dem unteren Lichtbündel 42 auf das obere Lichtbündel 40 vorgesehen. Zu diesem Zweck wird die Blendenanordnung 20 derart betätigt, dass anstelle des unteren Lichtbündels 42 nunmehr das obere Lichtbündel 40 aus dem Licht der Lichtquelle 16 selektiert wird, oder dass - falls zuvor beide Lichtbündel 40, 42 stets abwechselnd selektiert worden waren - nun nur noch das obere Lichtbündel 40 selektiert wird.

In Fig. 6 ist nicht nur die zueinander versetzte Anordnung der Lichtbündel 40, 42, sondern auch die darauf abgestimmte Dimensionierung des lichtempfindlichen Bereichs 54 eines photoempfindlichen Elements 32 der Sende/Empfangseinheit 36 gezeigt. Der lichtempfindliche Bereich 54 weist eine im Wesentlichen rechteckige Gestalt auf, wobei die Breite des Bereichs 54 in horizontaler Richtung ungefähr der Breite der Lichtbündel 40, 42 entspricht. Die Länge des lichtempfindlichen Bereichs 54 in einer zur versetzten Anordnung der Lichtbündel 40, 42 parallelen Richtung, d.h. in vertikaler Richtung in Fig. 6 und somit in Bewegungsrichtung des Oberwerkzeugs 48, ist dagegen zumindest so groß, dass die von den beiden Lichtbündeln 40, 42 erzeugten Lichtflecken noch detektiert werden können.

Falls die Ausdehnung des lichtempfindlichen Bereichs 54 in Längsrichtung noch größer gewählt wird, können beide Lichtbündel 40, 42 selbst dann jederzeit auf den lichtempfindlichen Bereich 54 auftreffen und vom Lichtempfänger 14 bzw. 36 erfasst werden, wenn das Oberwerkzeug 48 in vertikaler Richtung, d.h. parallel zu seiner Bewegungsrichtung, schwingt.

Um auch bei einer horizontalen Schwingung des Oberwerkzeugs 48 eine zuverlässige Detektion der abgestrahlten Lichtbündel 40, 42 zu gewährleisten, sind mehrere photoempfindliche Elemente 32 bei paralleler Ausrichtung ihrer lichtempfindlichen Bereiche 54 in einer Reihe nebeneinander angeordnet, wie es in Fig. 7 dargestellt ist. Beispielsweise können 150, 256 oder 512 lichtempfindliche Bereiche 54 nebeneinander angeordnet sein. Auf diese Weise kann auch ein entlang der Reihe der lichtempfindlichen Bereiche 54 schwingendes Lichtbündel 40, 42 zuverlässig erfasst werden. Eine derartige Anordnung von mehreren lichtempfindlichen Bereichen 54 nebeneinander ermöglicht auch die Erkennung und Unterscheidung kodierter Lichtbündel 40, 42, wie bereits erläutert.

Zu der Darstellung gemäß Fig. 6 und 7 ist noch anzumerken, dass die Lichtbündel 40, 42 im Querschnitt auch eine Halbkreisform besitzen können, so dass sie gemeinsam einen kreisförmigen oder ovalen Querschnitt bilden.

Obwohl die Verwendung der erfindungsgemäßen Überwachungsvorrichtung beispielhaft anhand der Absicherung einer Gesenkbiegepresse beschrieben wurde, kann die Überwachungsvorrichtung auch in anderen Bereichen eingesetzt werden, beispielsweise zur Zugangsüberwachung. Dabei könnte beispielsweise ein erstes Lichtbündel einem Warnbereich und ein zweites Lichtbündel einem Scharfbereich zugeordnet sein. Die beiden Lichtbündel können also zur Auslösung von unterschiedlichen Arten von Warnsignalen dienen.

Auch kann die erfindungsgemäße Überwachungsvorrichtung vorteilhafterweise zur Absicherung weiterer Maschinen eingesetzt werden, die ein bewegliches Werkzeugteil aufweisen. So kann die Überwachungsvorrichtung an Niederhaltern von Biegemaschinen und Papierschneidern, an Blechscheren, an Toren, Rolltoren, Scherkanten usw. zur Absicherung der Schließkanten angebracht werden.

### Bezugszeichenliste

- 10: Lichtsender
- 12: Reflektor
- 14: Lichtempfänger
- 16: Lichtquelle
- 18: Beleuchtungsoptik
- 20: Blendenanordnung
- 22: abgestrahltes Licht
- 26: reflektiertes Licht
- 30: Abbildungsoptik
- 32: photoempfindliches Element
- 34: Steuerschaltung
- 36: Sende/Empfangseinheit
- 38: halbdurchlässiger Spiegel
- 40: oberes Lichtbündel
- 42: unteres Lichtbündel
- 44: Unterwerkzeug
- 46: Werkstück
- 48: Oberwerkzeug
- 50: Unterseite
- 52: Haltearm
- 54: lichtempfindlicher Bereich

## Patentansprüche

1. Optische Überwachungsvorrichtung mit
einem Lichtsender (10; 36) zum Aussenden von wenigstens zwei, im Wesentlichen parallel zueinander versetzten Lichtbündeln (40, 42) in einen Schutzbereich und
einem Lichtempfänger (14; 36) zum Empfangen der ausgesandten Lichtbündel (40, 42) und zum Ausgeben entsprechender Empfangssignale,
**dadurch gekennzeichnet,**
**dass** der Lichtempfänger (14; 36) mehrere photoempfindliche Elemente (32) mit jeweils einem länglichen lichtempfindlichen Bereich (54) aufweist, dessen Längsrichtung parallel zu der Richtung ausgerichtet ist, in der die Lichtbündel (40, 42) zueinander versetzt sind, so **dass** jeweils alle abgestrahlten Lichtbündel (40, 42) vollständig durch den lichtempfindlichen Bereich (54) erfassbar sind,
**dass** die photoempfindlichen Elemente (32) bei paralleler Ausrichtung der lichtempfindlichen Bereiche (54) in einer Reihe senkrecht zu der versetzten Anordnung der Lichtbündel (40, 42) nebeneinander angeordnet sind, und
**dass** zur Unterscheidung der Lichtbündel (40, 42) am Lichtempfänger (14; 36) eine Steuerschaltung (34) vorgesehen ist, die den Lichtsender (10; 36) zu einem zeitlich versetzten Aussenden der Lichtbündel (40, 42) veranlasst.

2. Vorrichtung nach Anspruch 1,
**dadurch gekennzeichnet,**
**dass** der Lichtsender (10; 36) eine Lichtquelle (16) und eine Blendenanordnung (20) aufweist, durch die jeweils ein auszusendendes Lichtbündel (40, 42) aus dem Licht der Lichtquelle (16) selektierbar ist.

3. Vorrichtung nach Anspruch 2,
**dadurch gekennzeichnet,**
**dass** die Blendenanordnung (20) ein elektronisch steuerbares Intensitätsfilter aufweist, insbesondere einen LCD-Shutter.

4. Vorrichtung nach einem der vorherigen Ansprüche,
**dadurch gekennzeichnet,**
**dass** die Lichtbündel (40, 42) zumindest bereichsweise aneinander angrenzen oder überlappen, oder
**dass** die Lichtbündel (40, 42) zueinander beabstandet sind.

5. Vorrichtung nach einem der vorherigen Ansprüche,
**dadurch gekennzeichnet,**
**dass** in Längsrichtung des lichtempfindlichen Bereichs (54) die Ausdehnung des lichtempfindlichen Bereichs (54) mehr als doppelt so groß ist wie die Ausdehnung der Lichtbündel (40, 42) am Ort des Lichtempfängers (14; 36) und dass senkrecht hierzu die Ausdehnung des lichtempfindlichen Bereichs (54) im Wesentlichen der Ausdehnung der Lichtbündel (40, 42) entspricht.

6. Vorrichtung nach einem der vorherigen Ansprüche,
**dadurch gekennzeichnet,**
**dass** die Anordnung der mehreren photoempfindlichen Elemente (32) innerhalb der Ebene senkrecht zur Aussendungsrichtung der Lichtbündel (40, 42) verläuft.

7. Vorrichtung nach einem der vorherigen Ansprüche,
**dadurch gekennzeichnet,**
**dass** der Lichtempfänger (14; 36) eine CMOS-Zeile aufweist.

8. Vorrichtung nach einem der vorherigen Ansprüche,
**dadurch gekennzeichnet,**
**dass** der Lichtsender (10; 36) und der Lichtempfänger (14; 36) auf der gleichen Seite des Schutzbereichs angeordnet sind und die ausgesandten Lichtbündel (40, 42) durch wenigstens einen auf der jeweils gegenüberliegenden Seite des Schutzbereichs angeordneten Reflektor (12) in Richtung des Lichtempfängers (14; 36) umlenkbar sind.

9. Vorrichtung nach Anspruch 8,
**dadurch gekennzeichnet,**
**dass** jedem Lichtbündel (40, 42) ein eigener Reflektor (12) zugeordnet ist, und/oder
**dass** wenigstens ein und insbesondere jeder Reflektor (12) entlang einer Richtung senkrecht zu der versetzten Anordnung der Lichtbündel (40, 42) eine Kodierung aufweist.

10. Vorrichtung nach einem der vorherigen Ansprüche,
**dadurch gekennzeichnet,**
**dass** der Lichtempfänger (36) in den Lichtsender (36) integriert ist, oder
**dass** der Lichtempfänger (14) vom Lichtsender (10) beabstandet angeordnet ist.

11. Vorrichtung nach einem der vorherigen Ansprüche,
**dadurch gekennzeichnet,**
**dass** die Vorrichtung zur Anbringung an einem Oberwerkzeug (48) einer Gesenkbiegepresse vorgesehen ist,
wobei die Lichtbündel (40, 42) vorzugsweise unterhalb der Biegelinie (50) des Oberwerkzeugs (48) untereinander angeordnet sind.

## Claims

1. An optical monitoring apparatus comprising
a light transmitter (10; 36) for the transmission of at least two light beams (40, 42) offset substantially parallel to one another into a protected zone; and
a light receiver (14; 36) for the reception of the transmitted light beams (40, 42) and for the outputting of corresponding received signals,
**characterized in that**
the light receiver (14; 36) has a plurality of photo-sensitive elements (32) each having an elongate light sensitive region (54) whose longitudinal direction is aligned parallel to the direction in which the light beams (40, 42) are offset to one another such that all radiated light beams (40, 42) can be completely detected by the light sensitive region (54); and
**in that** the photo-sensitive elements (32) are arranged next to one another with a parallel alignment of the light sensitive regions (54) in a row perpendicular to the offset arrangement of the light beams (40, 42); and
**in that** a control circuit (34) is provided for the distinguishing of the light beams (40, 42) at the light receiver (14; 36) and causes the light transmitter (10; 36) to transmit of the light beams (40, 42) with offset time.

2. An apparatus in accordance with claim 1, **characterized in that** the light transmitter (10; 36) has a light source (16) and a diaphragm arrangement (20) by which a respective light beam (40, 42) to be transmitted can be selected from the light of the light source (16).

3. An apparatus in accordance with claim 2, **characterized in that** the diaphragm arrangement (20) has an electronically controllable intensity filter, in particular an LCD shutter.

4. An apparatus in accordance with any one of the preceding claims, **characterized in that** the light beams (40, 42) adjoin one another or overlap one another at least regionally; or **in that** the light beams (40, 42) are spaced apart from one another.

5. An apparatus in accordance with any one of the preceding claims, **characterized in that** the extent of the light sensitive region (54) is more than twice the size in the longitudinal direction of the light sensitive region (54) than the extent of the light beams (40, 42) at the location of the light receiver (14; 36); and **in that** the extent of the light sensitive region (54) perpendicular hereto substantially corresponds to the extent of the light beams (40, 42).

6. An apparatus in accordance with any one of the preceding claims, **characterized in that** the arrangement of the plurality of photo-sensitive elements (32) extends within the plane perpendicular to the transmission direction of the light beams (40, 42).

7. An apparatus in accordance with any one of the preceding claims, **characterized in that** the light receiver (14; 36) has a CMOS row.

8. An apparatus in accordance with any one of the preceding claims, **characterized in that** the light transmitter (10; 36) and the light receiver (14; 36) are arranged at the same side of the protected zone and the transmitted light beams (40, 42) can be deflected in the direction of the light receiver (14; 36) by at least one reflector (12) arranged at the respectively opposite side of the protected zone.

9. An apparatus in accordance with claim 8, **characterized**
**in that** a separate reflector (12) is associated with each light beam (40; 42); and/or in that at least one reflector (12), and in particular each reflector (12), has an encoding perpendicular to the offset arrangement of the light beams (40, 42).

10. An apparatus in accordance with any one of the preceding claims, **characterized in that** the light receiver (36) is integrated into the light transmitter (36); or **in that** the light receiver (14) is arranged spaced apart from the light transmitter (10).

11. An apparatus in accordance with any one of the preceding claims, **characterized in that** the apparatus is provided for attachment to an upper tool (48) of a bending press, wherein the light beams (40, 42) are preferably arranged beneath one another beneath the bending line (50) of the upper tool (48).

## Revendications

1. Dispositif optique de surveillance, comportant
un émetteur de lumière (10 ; 36) pour émettre dans une zone de protection au moins deux faisceaux lumineux (40, 42) décalés sensiblement parallèlement l'un par rapport à l'autre, et
un récepteur de lumière (14 ; 36) pour recevoir les faisceaux lumineux (40, 42) émis et pour envoyer des signaux de réception correspondants, **caractérisé en ce que**
le récepteur de lumière (14 ; 36) présente plusieurs éléments photosensibles (32) avec chacun une zone allongée (54) sensible à la lumière, dont la direction longitudinale est orientée parallèlement à la direction dans laquelle les faisceaux lumineux (40, 42) sont décalés l'un par rapport à l'autre, de telle sorte que tous les faisceaux lumineux (40, 42) rayonnés peuvent être totalement captés par la zone (54) sensible à la lumière,
**en ce que** les éléments photosensibles (32) sont agencés les uns à côté des autres lorsque les zones sensibles à la lumière (54) sont orientées parallèlement dans une rangée perpendiculairement à l'agencement décalé des faisceaux lumineux (40, 42), et
**en ce que** pour distinguer les faisceaux lumineux (40, 42) sur le récepteur de lumière (14 ; 36), il est prévu un circuit de commande (34) qui incite l'émetteur de lumière (10 ; 36) à émettre les faisceaux lumineux (40, 42) avec décalage temporel.

2. Dispositif selon la revendication 1,
**caractérisé en ce que**
l'émetteur de lumière (10 ; 36) présente une source lumineuse (16) et un agencement de diaphragme (20) qui permet de sélectionner à partir de la lumière de la source lumineuse (16) un faisceau lumineux (40, 42) respectif à émettre.

3. Dispositif selon la revendication 2,
**caractérisé en ce que**
l'agencement à diaphragme (20) présente un filtre d'intensité à commande électronique, en particulier un obturateur LCD.

4. Dispositif selon l'une des revendications précédentes,
**caractérisé en ce que**
les faisceaux lumineux (40, 42) sont adjacents l'un à l'autre ou se chevauchent au moins par portions, ou
**en ce que** les faisceaux lumineux (40, 42) sont espacés l'un de l'autre.

5. Dispositif selon l'une des revendications précédentes,
**caractérisé en ce que**
en direction longitudinale de la zone sensible à la lumière (54), l'extension de la zone sensible à la lumière (54) est plus du double de l'extension des faisceaux lumineux (40, 42) au lieu du récepteur de lumière (14 ; 36) et **en ce que** perpendiculairement à cela, l'extension de la zone sensible à la lumière (54) correspond sensiblement à l'extension des faisceaux lumineux (40, 42).

6. Dispositif selon l'une des revendications précédentes,
**caractérisé en ce que**
l'agencement des plusieurs éléments photosensibles (32) s'étend à l'intérieur du plan perpendiculairement à la direction d'émission des faisceaux lumineux (40, 42).

7. Dispositif selon l'une des revendications précédentes,
**caractérisé en ce que**
le récepteur de lumière (14 ; 36) présente une rangée CMOS.

8. Dispositif selon l'une des revendications précédentes,
**caractérisé en ce que**
l'émetteur de lumière (10 ; 36) et le récepteur de lumière (14 ; 36) sont agencés sur le même côté de la zone de protection et les faisceaux lumineux (40, 42) émis peuvent être déviés en direction du récepteur de lumière (14 ; 36) par au moins un réflecteur (12) agencé sur le côté opposé respectif de la zone de protection.

9. Dispositif selon la revendication 8,
**caractérisé en ce que**
à chaque faisceau lumineux (40, 42) est associé un propre réflecteur (12), et/ou
**en ce qu'**au moins un et en particulier chaque réflecteur (12) présente un codage le long d'une direction perpendiculaire à l'agencement en décalage des faisceaux lumineux (40, 42).

10. Dispositif selon l'une des revendications précédentes,
**caractérisé en ce que**
le récepteur de lumière (36) est intégré dans l'émetteur de lumière (36), ou
**en ce que** le récepteur de lumière (14) est agencé à distance de l'émetteur de lumière (10).

11. Dispositif selon l'une des revendications précédentes,
**caractérisé en ce que**
le dispositif est prévu pour être monté sur un outil supérieur (48) d'une presse plieuse,
les faisceaux lumineux (40, 42) étant agencés de préférence l'un au-dessous de l'autre au-dessous de la ligne de pliage (50) de l'outil supérieur (48).
